# EUROPÄISCHE PATENTSCHRIFT

(11) **EP 1 988 389 B1**
(45) Veröffentlichungstag und Bekanntmachung des Hinweises auf die Patenterteilung: **20.07.2011**
(21) Anmeldenummer: 07008994.1
(22) Anmeldetag: 04.05.2007
(51) Int. Cl.: G01N 21/88, G01N 21/94, G01N 21/958, G01S 17/48, G01S 17/88, G06K 9/00, G06K 9/20, G01V 8/12, F16P 3/14

(54) **Überwachung eines Raumbereichs mit Bestimmung des Verschmutzungsgrads einer transparenter Grenzfläche anhand des Bildkontrasts**
Surveillance of a zone with determination of the amount of contamination of a transparent surface based on the image contrast
Surveillance d'une zone avec la détermination de la contamination d'une surface transparente basée sur le contraste d'image

(43) Veröffentlichungstag der Anmeldung: 05.11.2008
(73) Patentinhaber: SICK AG, 79183 Waldkirch (DE)
(72) Erfinder: Wüstefeld, Martin, 79350 Sexau (DE)
(74) Vertreter: Ludewigt, Christoph

(56) Entgegenhaltungen:
- EP-A2- 1 659 421
- DE-A1- 10 033 608
- DE-A1-102004 020 998
- JP-A- 58 209 640

## Beschreibung

Die Erfindung betrifft eine Vorrichtung und ein Verfahren zur Überwachung eines Raumbereichs mit Bestimmung des Verschmutzungsgrads aus dem Bildkontrast nach dem Oberbegriff von Anspruch 1 beziehungsweise 12.

Zur Überwachung von Raumbereichen werden in zunehmendem Maße kamerabasierte Schutzeinrichtungen als Sensoren verwendet. Bei solchen Schutzeinrichtungen kann es sich um Anwendungen im Gebäude- oder Objektschutz handeln, bei dem ein unerlaubtes Eindringen bemerkt und letztlich meist durch Eingreifen von Sicherheitspersonal verhindert wird. Ein anderes Anwendungsfeld ist die Sicherheitstechnik, bei der eine automatisiert arbeitende Schutzeinrichtung eine Gefahrenquelle innerhalb des Raumbereichs überwacht und über eine Steuerung die Absicherung dieser Gefahrenquelle vornehmen kann. Unter Absichern kann hierbei das rechtzeitige Abschalten einer gefährlichen Maschine, aber auch das Auslösen eines Alarms oder einer Schutzvorrichtung wie beispielsweise eines Schirms verstanden werden. Beispiele für eine Gefahrenquelle sind eine Presse, der sich Bedienpersonal in unerlaubter Weise nähert, aber auch ein Roboter, vor dem in einem kooperativen Arbeitsumfeld das in der Nähe arbeitende Personal geschützt werden muss.

Die Kamera der Schutzeinrichtung weist einen eigentlichen Bildsensor auf, der für gewöhnlich ein CCD- oder CMOS-Chip ist. Dieser Chip und eine vorgeschaltete Optik sind von einem Gehäuse geschützt, das mit einer Frontscheibe als Spritz- und Staubschutz gegenüber dem Raumbereich versehen sein kann. Diese Frontscheibe oder die vorgeschaltete Optik kann verunreinigen und damit die sichere Detektion von Objekten in dem Raumbereich verhindern. Daher ist es notwendig, eine solche Verschmutzung rechtzeitig zu erkennen, um durch eine Wartung und Reinigung die Sicherheit des Sensors weiterhin zu gewährleisten

Im Stand der Technik sind mehrere Ansätze bekannt, die Verschmutzungen zu detektieren. Nicht alle diese Ansätze sind auch von Kameras bekannt, sondern nur von anderen Sensoren, wie etwa einem Laserscanner. So ist beispielsweise bekannt, die Frontscheibe mit einem separaten Strahlengang zu durchstrahlen, um dabei den Empfangspegel mit einem bei sauberer Frontscheibe aufgenommenen Referenzempfangspegel zu vergleichen.

Ein besonderer Ansatz zur Verschmutzungsdetektion ist aus der DE 10 2004 020 998 A1 bekannt, bei dem die Eintrittsoptik der Kamera nach vorne auf die Frontscheibe verlagert wird. Dadurch soll sichergestellt werden, dass Verunreinigungen auf der Frontscheibe über die Optik einigermaßen gleichmäßig auf das ganze Bild verteilt werden. Eine lokale Verschmutzung der Frontscheibe verdeckt damit nicht mehr einen Teil des Raumbereichs, sondern senkt insgesamt die Helligkeit des aufgenommenen Bildes ab. Dieser Helligkeitsabfall kann dynamisch oder durch Vergleich mit einer Referenzhelligkeit bei sauberer Frontscheibe erkannt werden. In einer alternativen Ausführungsform bei sauberer Abbildungsoptik und Frontscheibe wird der Kontrast eines Referenzbildes aufgenommen. Im Betrieb wird jeweils ein Bildkontrastwert des aufgenommenen Bildes bestimmt und mit dem Referenzkontrast verglichen.

Nach diesem Stand der Technik sind also Helligkeit oder Bildkontrast zwei mögliche Maße für die Verschmutzung der Frontscheibe. Nachteilig an dem Ansatz ist, dass die Vorverlagerung der Aperturblende zur Frontscheibe eine sehr ungewöhnliche Objektivausführung ist, die weder mit kostengünstigen, im Handel erhältlichen Bauteilen umgesetzt werden kann noch insgesamt ein für die Bildqualität optimales Objektiv darstellt. Weiterhin wird bei beiden Ausführungsformen nur ein globales Verschmutzungsmaß bestimmt, welches unklar lässt, wie die Verunreinigungen örtlich auf der Frontscheibe oder äußersten Fläche des Objektivs verteilt sind. Schließlich ist nicht sichergestellt, ob der überwachte Raumbereich überhaupt an sich einen hinreichenden Kontrast aufweist, der eine Detektion eines Abfalls dieses Kontrasts mit der in der Sicherheitstechnik notwendigen hohen Zuverlässigkeit erlaubt.

Aus der DE 100 33 608 A1 ist ein Verfahren zum Absichern eines Gefahrenbereichs bekannt, bei dem Licht auf einen gegebenen Hintergrund projiziert und dieser Hintergrund mit einer Kamera überwacht wird. Abschattungen des Lichts kann die Kamera erkennen, und aus der Position der Abschattung mittels Triangulation auch auf den Ort eines Eingriffs in den von dem Licht beherrschten Bereich schließen. Um Verschmutzungen während des Betriebs zu begegnen, schlägt die DE 100 33 608 A1 einerseits vor, die Kamera nach unten zu neigen, so dass sich auf der Vorderfront weniger Schmutz ansammeln kann, und andererseits, in regelmäßigen zeitlichen Abständen das Referenzbild des Hintergrundes neu aufzunehmen, so dass also die Verschmutzungen sowohl im Referenzbild wie im aktuellen Bild auftreten und sich dadurch teilweise kompensieren.

Die JP 58 209 640 A zeigt einen Regensensor für einen Scheibenwischer eines Kraftfahrzeugs. Im Durchlichtverfahren wird an einer Stelle der Windschutzscheibe ein Kontrastabfall bei vorhandenen Regentropfen festgestellt.

Die EP 1 659 421 A2 offenbart einen Sensor zur Überwachung des Nahbereichs an einem Kraftfahrzeug. Dabei werden mittels einer Infrarot-Empfangseinrichtung Personen erkannt, um Unfälle an einem zu schließenden Verdeck eines Cabriolets zu verhindern. Um Verschmutzungen einer Linse des Sensors zu erkennen, wird in einer Messung anhand der Empfangsintensität ein Intensitätsabfall des Empfangssignals von einem Infrarot-Emitter festgestellt. Wird dabei eine Verschmutzung festgestellt, so wird für den eigentlichen Betrieb die Intensität des Infrarot-Emitters erhöht.

Es ist daher Aufgabe der Erfindung, eine Überwachungsvorrichtung der geschilderten Art anzugeben, deren Funktion nicht von Verschmutzungen beeinträchtigt wird.

Diese Aufgabe wird erfindungsgemäß durch eine Vorrichtung gemäß Anspruch 1 und ein Verfahren gemäß Anspruch 11 gelöst. Indem ein Kontrastmuster aktiv in den Raumbereich projiziert wird, ist ein ausreichender Bildkontrast völlig unabhängig von der überwachten Szene gesichert. Dieses Kontrastmuster ermöglicht zugleich einen hohen lokalen Kontrastgradienten, aus dem der Bildkontrast nicht nur als ein pauschaler globaler Wert berechnet werden kann, sondern weitere und feinere Kriterien erlaubt. Gegenüber herkömmlichen Systemen, welche die transparente Grenzfläche mit einem eigenen Strahl durchleuchten, sind auch die Herstellungskosten und die Baugröße reduziert. Die erfindungsgemäße Vorrichtung überwacht die Verschmutzung des kompletten Strahlengangs.

Die Erfindung geht damit von dem Prinzip aus, von Qualitätsmaßen des aufgenommenen Bildes auf die Verschmutzung der transparenten Grenzfläche zu schließen. Sie nutzt den Bildkontrast als Maß, wobei dieser Bildkontrast durch die aktive Beleuchtung mit einem Kontrastmuster mit allen gewünschten Eigenschaften vorgegeben werden kann. Auf diese Weise enthält der Bildkontrast sehr viele Informationen über Art und Grad der Verschmutzung, wobei diese Informationen durch das Kontrastmuster auch gezielt gewählt werden können.

Bevorzugt ist die Auswertungseinheit dafür ausgebildet, einen Objekteingriff in den Raumbereich zu erkennen, und es ist eine Steuerung vorgesehen, welche für die Absicherung einer Gefahrenquelle in dem Raumbereich bei Objekteingriff ausgebildet ist. Dies ist die Anwendung der Vorrichtung in der Sicherheitstechnik, bei der die Kontrolle über die Verschmutzung der Grenzfläche besonders wichtig ist, um die Zuverlässigkeit jederzeit zu gewährleisten.

Erfindungsgemäß ist die Auswertungseinheit dafür ausgebildet, den Bildkontrast als Funktion des Ortes zu bestimmen und kann somit eine Verschmutzung auf der Grenzfläche lokalisieren. Das aktiv projizierte Kontrastmuster kann mit nahezu jeder gewünschten Genauigkeit Kontrastgradienten in dem Raumbereich erzeugen. Werden diese Informationen von der Auswertungseinheit ausgewertet, so können Abweichungen oder Veränderungen des lokalen Bildkontrasts mit hoher Genauigkeit erkannt und daraus genau auf den Ort der Verschmutzung auf der Grenzfläche geschlossen werden. Die Vorrichtung weiß somit nicht nur, wie stark die Grenzfläche verschmutzt ist, sondern kann auch gezielt angeben, an welcher Stelle eine solche Verschmutzung vorliegt. Dies kann in einer vorteilhaften Weiterbildung dafür ausgenutzt werden, abhängig vom Ort der Verschmutzung eine Warnung auszugeben oder in einen Fehlermodus zu schalten. Denn manche Verschmutzungen der Grenzfläche liegen möglicherweise überhaupt nicht an der Stelle, wo die sicherheitskritischen Teile des Raumbereichs aufgenommen werden. Die Vorrichtung kann auf diese Weise differenzieren, ob die Verschmutzung an einer unwichtigen Stelle liegt oder ob es notwendig ist, die Grenzfläche zu reinigen. Innerhalb der Sicherheitstechnik bedeutet Fehlermodus dabei immer gleichzeitig das Absichern der Gefahrenquelle.

In einer bevorzugten Ausführungsform ist die Auswertungseinheit dafür ausgebildet, den Referenzbildkontrast bei sauberer Grenzfläche zu bestimmen. Über die dynamische Veränderung des Bildkontrasts hinaus, die während des Betriebs überwacht werden kann, kennt die Vorrichtung auf diese Weise auch einen Sollwert für den Bildkontrast und kann daraus einfacher und genauer bewerten, ob der Bildkontrast in einem Maße abgefallen ist, das eine Reinigung erfordert. Der Referenzbildkontrast spiegelt somit die natürliche Unschärfe der Vorrichtung wieder.

Bevorzugt ist dem Bildsensor ein an das Kontrastmuster angepasster optischer Filter vorgeschaltet. Somit erreicht weniger Störlicht den Bildsensor, und die aufgenommenen Bilddaten reflektieren mit höherer Zuverlässigkeit relevante Eigenschaften des Raumbereichs und des Kontrastmusters. Folglich wird auch die Ermittlung des Bildkontrastwerts genauer.

Bevorzugt ist dem Bildsensor eine Optik vorgeschaltet, die von der Grenzfläche geschützt ist. Nicht jede Verschmutzung kann durch einfache Reinigung beseitigt werden, sondern es können auch Kratzer und sonstige Beschädigungen auftreten. Dann ist es wesentlich kostengünstiger, die empfindliche und wertvolle Optik zu erhalten und nur die transparente Grenzfläche auszutauschen.

Vorteilhafterweise ist die Auswertungseinheit dafür ausgebildet, den Referenzbildkontrast unter Ausnutzung einer bekannten Basiskontrastfunktion der Optik und/oder der Grenzfläche zu bestimmen. Dies ist letztlich eine Alternative dazu, den Referenzbildkontrast aus dem aufgenommenen Bild zu berechnen, und unterstützt die Genauigkeit dieser Referenzbildkontrastbestimmung aus theoretisch bekannten Werten.

Bevorzugt weist die Vorrichtung eine Stereokamera oder eine entfernungsmessende Kamera insbesondere nach dem Lichtlaufzeitprinzip auf. Solche dreidimensionalen Bildsensoren ermöglichen eine besonders große Flexibilität bei der Einrichtung von Schutzzonen, die als gefährlich gelten, und eine besonders genaue Überwachung des Raumbereichs.

Als alternativer dreidimensionaler Sensor weist die Vorrichtung eine nach dem Prinzip der aktiven Triangulation entfernungsmessende Kamera auf, wobei das Kontrastmuster zugleich ein komplexes Triangulationsmuster ist. Die aktive Triangulation ist ein besonderes Verfahren zur Bestimmung von Entfernungswerten, die im Gegensatz zur Stereokamera mit nur einer Kamera auskommt und im Gegensatz zu einer entfernungsmessenden Kamera nach dem Lichtlaufzeitprinzip keine hochgenaue Elektronik zur Auswertung der extrem kurzen Lichtlaufzeiten benötigt. Aktive Triangulation funktioniert aber nur mit einem komplexen Kontrastmuster, welches die erforderliche Informationsdichte enthält, die als Basis für die Triangulation benötigt wird. Gemäß dieser besonderen Ausführungsform kann ein und dasselbe Kontrastmuster sowohl die aktive Triangulation wie auch die erfindungsgemäße Verschmutzungsmessung ermöglichen.

In einer weiteren Ausführungsform ist die Kontrastbeleuchtungseinrichtung monochromatisch. Das macht nicht nur die Beleuchtung, sondern auch die Auswertung weniger aufwändig, die Genauigkeit der Kontrastwerte bleibt dennoch erhalten. Besonders in Zusammenwirkung mit einem auf den monochromatischen Frequenzbereich abgestimmten Filter kann der Bildkontrast sehr genau bestimmt werden.

Das erfindungsgemäße Verfahren kann auf ähnliche Weise durch weitere Merkmale ausgestaltet werden und zeigt dabei ähnliche Vorteile. Derartige weitere Merkmale sind beispielhaft, aber nicht abschließend, in den sich anschließenden Unteransprüchen beschrieben.

Die Erfindung wird nachstehend auch hinsichtlich weiterer Vorteile und Merkmale unter Bezugnahme auf die beigefügte Zeichnung anhand von Ausführungsbeispielen erläutert. Die Figuren der Zeichnung zeigen in:
- Fig. 1: eine schematische Übersichtsdarstellung der erfindungsgemäßen Vorrichtung mit einem aktiv projizierten Kontrastmuster gemäß einer ersten Ausführungsform; und
- Fig. 2: eine Darstellung gemäß Figur 1 einer zweiten Ausführungsform der Erfindung, bei der die transparente Grenzfläche zugleich einen Teil der Abbildungsoptik der Vorrichtung darstellt.

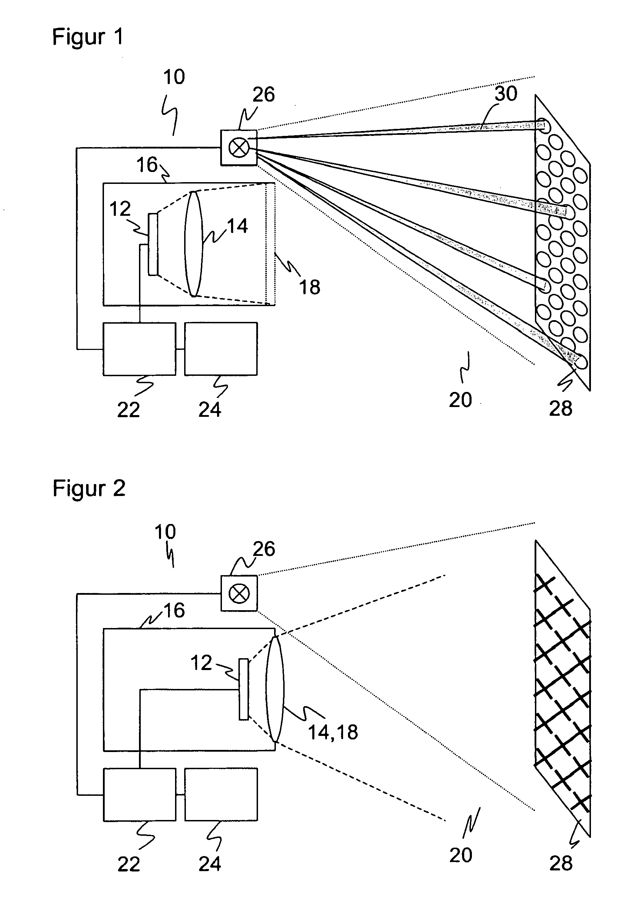

Figur 1 zeigt eine erste Ausführungsform der erfindungsgemäßen Vorrichtung 10 zur Überwachung eines Raumbereichs. Ein Bildsensor 12, dem eine Optik 14 vorgeschaltet ist, ist geschützt in einem Gehäuse 16 angeordnet. Der Bildsensor 12 ist in der Lage, durch eine transparente Grenzfläche 18 ein pixelaufgelöstes Bild eines Raumbereichs 20 aufzunehmen. Der Bildsensor 12 kann beispielsweise ein zeilen- oder matrixförmiger CCD- oder CMOS-Chip sein. Die transparente Grenzfläche 18 kann aus Glas oder einem durchsichtigen Kunststoff bestehen und wird häufig als Frontscheibe ausgeführt. Die vorgeschaltete Optik 14 ist vereinfacht als eine einfache Sammellinse dargestellt, hier kommt aber alternativ jede refraktive, reflektive oder diffraktive Optik auch aus mehreren Komponenten in Frage, wie sie an sich aus Kameraobjektiven bekannt sind.

Der Bildsensor 12 ist mit einer Auswertungseinheit 22 verbunden, welche die Bilddaten auslesen und verarbeiten kann. Diese Bilddaten werden daraufhin untersucht, ob in dem Raumbereich 20 ein Ereignis erkannt wird, auf das zu reagieren ist. Ein solches Ereignis kann der unerlaubte Eingriff eines Objekts in den Raumbereich 20, eine Bewegung oder ein Betreten des Raumbereichs 20 durch Bedienpersonal oder jede sonst denkbare, in den Bilddaten reflektierte Veränderung sein. Eine Möglichkeit, solche Ereignisse aufzufinden, ist der Vergleich des im Betrieb aufgenommenen Bildes mit einem zuvor eingelernten Referenzbild.

Die Auswertungseinheit 22 wiederum ist mit einer Steuerung 24 verbunden. Diese Steuerung 24 ist in der Lage, auf ein von der Auswertungseinheit 22 gemeldetes Ereignis zu reagieren, indem ein Alarm ausgegeben, ein Warnlicht eingeschaltet oder eine von der Vorrichtung 10 überwachte Gefahrenquelle durch Abschalten einer Maschine, Versetzen in einen Ruhestand, Schließen einer Tür oder eines Schutzschirms oder dergleichen abgesichert wird.

Die Auswertungseinheit 22 ist außerdem mit einer Beleuchtung 26 verbunden und kann diese ein- und ausschalten oder zur Auswahl einer bestimmten Beleuchtungsart veranlassen. Abweichend von der Darstellung können Auswertungseinheit 22, Steuerung 24 und Beleuchtung 26 insgesamt oder teilweise auch innerhalb des Gehäuses 16 oder auch über bekannte drahtgebundene oder drahtlose Schnittstellen in größerer Entfernung vorgesehen sein.

Die Beleuchtung 26 projiziert im Betrieb aktiv ein Kontrastmuster in den Raumbereich 20. In Figur 1 ist nur ein sehr schematisches, vereinfacht rechteckig dargestelltes Objekt 28 in dem Raumbereich 20 zu erkennen, auf dem die Beleuchtung 26 ein zu einer Matrix angeordnetes Punktmuster erzeugt. Dieses Punktmuster ist nur als Beispiel zu verstehen, es können beliebige andere Muster vorgesehen sein, solange sie einen hinreichend starken und über den Raumbereich variierenden Kontrast liefern. Dazu gehören Streifenmuster, Gittermuster, insbesondere aber auch komplexe unregelmäßige Muster, bei denen aus der Struktur jedes Teilbereiches auf seine Lage geschlossen werden kann.

Als Lichtquelle in der Beleuchtung 26 kann eine gewöhnliche Glühbirne oder Halogenleuchte dienen, bevorzugt ist aber eine Halbleiterlichtquelle wie eine Diode oder ein Laser. Das Kontrastmuster entsteht dabei beispielsweise durch eine entsprechende Maske oder ein gezieltes Abscannen mittels einer eng begrenzten Lichtquelle. Um den apparativen Aufwand zu begrenzen und die Auswertung zu erleichtern, kann die Lichtquelle monochromatisch sein.

Um nun erfindungsgemäß die Verschmutzung der transparenten Grenzfläche 18 zu überwachen, bestimmt die Auswertungseinheit 22 den Bildkontrast der von dem Bildsensor aufgenommenen Bilder. Dieser Bildkontrast ist aufgrund des von der Beleuchtung 26 aktiv projizierten Kontrastmusters hoch und gut zu bestimmen. Die Auswertungseinheit 22 vergleicht den jeweils bestimmten Bildkontrast entweder mit zuvor während des Betriebs ermittelten Werten oder mit einem Referenzkontrastwert, der vorab bei bekannt sauberer Grenzfläche 18 eingelernt worden ist. In diesen Referenzkontrastwert, der die natürliche Unschärfe des Bildsensors darstellt, kann auch eine bekannte Basiskontrastfunktion der Optik 14 beziehungsweise der Grenzfläche 18 einfließen. Diese Basiskontrastfunktion ist also theoretisch aus Eigenschaften von Optik 14 und Grenzfläche 18 ermittelt, somit schon vorab bekannt und kann helfen, den Referenzkontrastwert genauer zu machen.

Da das Kontrastmuster an jedem Ort aufgrund seiner Wahl einen hohen Kontrastgradienten aufweisen kann, ist es nicht nur möglich, einen globalen Kontrastwert zu ermitteln, sondern eine je nach Kontrastmuster auch sehr fein aufgelöste örtliche Funktion des Kontrasts. Aus der lokalen Variation dieser Funktion kann dann nicht nur geschlossen werden, dass die Grenzfläche 18 überhaupt verschmutzt ist, sondern zugleich auch der Ort und der Verschmutzungsgrad einer jeden Verunreinigung bestimmt und bewertet werden. Die Vorrichtung 10 ist auf diese Weise in der Lage, die Verunreinigung örtlich zu bewerten und nur dann einen Alarm oder eine Fehlfunktion auszulösen, wenn die Verunreinigung in einem kritischen Bereich, also beispielsweise vor der Gefahrenquelle liegt. Andererseits gibt es Verunreinigungen gerade in peripheren Lagen, die zunächst keine Wartung notwendig machen. Die Vorrichtung 10 kann, wenn sie eine solche Verschmutzung als unkritisch bewertet, ohne jeglichen Verlust an Zuverlässigkeit weiterbetrieben werden.

Die Optik 14 oder die Grenzfläche 18 können zusätzlich einen an das Kontrastmuster angepassten optischen Filter aufweisen. Somit werden von vorneherein nur solche optischen Frequenzen durchgelassen, die dem Kontrastmuster entsprechen, was besonders einfach ist, wenn dieses monochromatisch ist. Auf diese Weise kann der Einfluss durch Licht von Fremdstörern zurückgedrängt werden, und die Auswertung sowie die Bestimmung des Bildkontrasts wird genauer.

In der Figur 1 ist nur eine einfache Kamera dargestellt. In einer weiteren Ausführungsform kann statt einer solchen einfachen Kamera, welche flache Bilder aufnimmt, auch eine entfernungsauflösende Kamera vorgesehen sein, die also dreidimensionale Bilddaten liefert. Solche dreidimensionalen Bilddaten können viel genauer bewertet werden, weil Schutzzonen um Gefahrenquellen räumlich und flexibel definiert werden können. Außerdem kann die Szene auf diese Weise auch leichter dynamisch bewertet werden, denn eine Abschattung der Gefahrenquelle muss nicht notwendig auch bedeuten, dass das abgeschattete Objekt nahe an der Gefahrenquelle ist. Dies lässt sich nur mittels der Entfernung bewerten. Auch die Geschwindigkeit des eingreifenden Objekts lässt sich aus Entfernungen viel besser bewerten, und eine langsame Bewegung in einer bestimmten Entfernung zu einer Gefahrenquelle kann noch unkritisch sein, was eine schnelle Bewegung nicht wäre. Die dreidimensionale Auswertung ist also viel zuverlässiger und löst seltener unnötige Fehlalarme aus.

Eine Technik, ein dreidimensionales Bild zu erhalten, ist eine Stereokamera, bei der zwei oder mehrere Kameras den Raumbereich 20 aus verschiedener Perspektive aufnehmen und aus der Lage von korrespondierenden Objekten in den Bildern mittels einer Disparitätsschätzung auf die Entfernung geschlossen wird. Eine Alternativetechnik ist eine entfernungsmessende Kamera nach dem Prinzip der Lichtlaufzeit, welche den Raumbereich 20 aktiv beleuchtet und misst, wie lange das Licht für den Weg von der Beleuchtung 26 über das Objekt 28 zum Bildsensor 12 braucht. Hierbei hat also die Beleuchtung 26 eine Doppelfunktion zum Ermitteln der Lichtlaufzeit einerseits und zur Erhöhung des Kontrastes im Raumbereich 20 andererseits.

Eine weitere Möglichkeit, ein entfernungsauflösendes Bild zu erhalten, ist die aktive Triangulation. Hierbei wird das von der Beleuchtung 26 projizierte Kontrastmuster dafür ausgenutzt, die Lage von Strukturen innerhalb dieses Kontrastmusters mittels einer Triangulation zu bewerten und daraus auf die Entfernung zu schließen. Jedes strukturelle Merkmal des Kontrastmusters, in der Darstellung der Figur 1 also jeder der Punkte, bildet eine Triangulationsbasis 30. Die besondere Struktur des komplexen Kontrastmusters dient auch hier doppelt einerseits der Erhöhung des Kontrastbildwertes und andererseits der Entfernungsbestimmung.

In Figur 2 ist eine weitere Ausführungsform der Erfindung dargestellt. Dabei bezeichnen gleiche Bezugszeichen die gleichen Merkmale. Der Unterschied dieser Ausführungsform ist, dass Optik 14 und transparente Grenzfläche 18 zusammenfallen. Die Grenzfläche 18 ist also zugleich die Optik oder zumindest Teil der Optik 14. Außerdem ist in der Darstellung der Figur 2 ein anderes Kontrastmuster dargestellt, um zu illustrieren, dass dieses Kontrastmuster eine andere Gestalt haben kann als dasjenige gemäß Figur 1. Wie bereits oben erläutert, ist das Kontrastmuster aber auch auf die beiden dargestellten Formen nicht beschränkt.

## Patentansprüche

1. Vorrichtung (10) zur Überwachung eines Raumbereichs (20) mit mindestens einem Bildsensor (12), die eine transparente Grenzfläche (18) aufweist, insbesondere eine Frontscheibe oder eine Frontlinse, sowie mit einer Auswertungseinheit (22), die dafür ausgebildet ist, einen Referenzbildkontrast bei bekanntem Verschmutzungsgrad sowie den Bildkontrast von dem Bildsensor (12) aufgenommener Bilder und aus dem Bildkontrast einen Verschmutzungsgrad der Grenzfläche (18) zu bestimmen und den Referenzbildkontrast durch Vergleich mit dem Bildkontrast in die Bestimmung des Verschmutzungsgrads einzubeziehen,
**dadurch gekennzeichnet,**
**dass** eine Kontrastbeleuchtungseinrichtung (26) vorgesehen ist, die dafür ausgebildet ist, den Raumbereich (20) mit einem Kontrastmuster auszuleuchten und dass die Auswertungseinheit (22) dafür ausgebildet ist, den Bildkontrast als Funktion des Ortes zu bestimmen und somit eine Verschmutzung auf der Grenzfläche (18) zu lokalisieren.

2. Vorrichtung (10) nach Anspruch 1,
wobei die Auswertungseinheit (22) dafür ausgebildet ist, einen Objekteingriff in den Raumbereich (20) zu erkennen und wobei eine Steuerung (24) vorgesehen ist, welche für die Absicherung einer Gefahrenquelle in dem Raumbereich (20) bei Objekteingriff ausgebildet ist.

3. Vorrichtung (10) nach Anspruch 1 oder 2,
wobei die Auswertungseinheit (22) dafür ausgebildet ist, abhängig vom Ort der Verschmutzung eine Warnung auszugeben oder in einen Fehlermodus zu schalten.

4. Vorrichtung (10) nach einem der vorhergehenden Ansprüche,
wobei die Auswertungseinheit (22) ausgebildet ist, den Referenzbildkontrast bei bei sauberer Grenzfläche (18) zu bestimmen.

5. Vorrichtung (10) nach einem der vorhergehenden Ansprüche,
wobei dem Bildsensor (12) ein an das Kontrastmuster angepasster optischer Filter (14, 18) vorgeschaltet ist.

6. Vorrichtung (10) nach einem der vorhergehenden Ansprüche,
wobei dem Bildsensor (12) eine Optik (14) vorgeschaltet ist, die von der Grenzfläche (18) geschützt ist.

7. Vorrichtung (10) nach Anspruch 6,
wobei die Auswertungseinheit (22) dafür ausgebildet ist, den Referenzbildkontrast unter Ausnutzung einer bekannten Basiskontrastfunktion der Optik (14) und/oder der Grenzfläche (18) zu bestimmen.

8. Vorrichtung (10) nach einem der vorhergehenden Ansprüche,
die eine Stereokamera oder eine entfernungsmessende Kamera insbesondere nach dem Lichtlaufzeitprinzip aufweist.

9. Vorrichtung (10) nach einem der vorhergehenden Ansprüche,
die eine nach dem Prinzip der aktiven Triangulation entfernungsmessende Kamera aufweist, wobei das Kontrastmuster zugleich ein komplexes Triangulationsmuster ist.

10. Vorrichtung (10) nach einem der vorhergehenden Ansprüche,
wobei die Kontrastbeleuchtungseinrichtung monochromatisch ist.

11. Verfahren zur Überwachung eines Raumbereichs (20) mit mindestens einem von einer transparenten Grenzfläche (18) geschützten Bildsensor (12), insbesondere einer Frontscheibe oder einer Frontlinse, wobei ein Referenzbildkontrast bei bekanntem Verschmutzungsgrad sowie der Bildkontrast von mit dem Bildsensor (12) im Betrieb aufgenommenen Bildern und aus dem Bildkontrast ein Verschmutzungsgrad der Grenzfläche (18) unter Einbeziehung eines Vergleichs zwischen Bildkontrast der im Betrieb aufgenommener Bilder und des Referenzbildkontrasts bestimmt wird,
**dadurch gekennzeichnet,**
**dass** der Raumbereich (20) aktiv mit einem Kontrastmuster ausgeleuchtet wird und dass der Bildkontrast als Funktion des Ortes bestimmt und somit eine Verschmutzung auf der Grenzfläche (18) lokalisiert wird.

12. Verfahren nach Anspruch 11,
wobei der Raumbereich (20) auf einen Objekteingriff überwacht und eine Gefahrenquelle in dem Raumbereich (20) bei Objekteingriff abgesichert wird.

13. Verfahren nach Anspruch 11 oder 12,
wobei abhängig vom Ort der Verschmutzung eine Warnung ausgegeben oder die Gefahrenquelle abgesichert wird.

14. Verfahren nach einem der Ansprüche 11 bis 13,
wobei der Referenzbildkontrast bei sauberer Grenzfläche oder unter Ausnutzung einer bekannten Basiskontrastfunktion einer Optik (14) und/oder der Grenzfläche (18) bestimmt wird.

15. Verfahren nach einem der Ansprüche 11 bis 14,
wobei die Überwachung das Prinzip der aktiven Triangulation ausnutzt und wobei das Kontrastmuster zugleich ein komplexes Triangulationsmuster ist.

## Claims

1. An apparatus (10) for monitoring a spatial zone (20) having at least one image sensor (12) which has a transparent boundary surface (18), in particular a front screen or a front lens, as well as having an evaluation unit (22) which is designed to determine a reference image contrast at a known degree of contamination as well as to determine the image contrast of images taken by the image sensor (12) and to determine a degree of contamination of the boundary surface (18) from the image contrast and to include the reference image contrast in the determination of the degree of contamination by comparison with the image contrast,
**characterized in that**
a contrast illumination device (26) is provided which is designed to illuminate the spatial zone (20) with a contrast pattern; and **in that** the evaluation unit (22) is designed to determine the image contrast as a function of the location and thus to localize contamination on the boundary surface (18).

2. An apparatus (10) in accordance with claim 1,
wherein the evaluation unit (22) is designed to recognize an object intrusion into the spatial zone (20); and wherein a control (24) is provided which is designed for the securing of a source of danger in the spatial zone (20) on intrusion of an object.

3. An apparatus (10) in accordance with claim 1 or claim 2,
wherein the evaluation unit (22) is designed to output a warning or to switch into an error mode in dependence on the location of the contamination.

4. An apparatus (10) in accordance with any one of the preceding claims,
wherein the evaluation unit (22) is designed to determine the reference image contrast with a clean boundary surface (18).

5. An apparatus (10) in accordance with any one of the preceding claims,
wherein an optical filter (14, 18) adapted to the contrast pattern is connected before the image sensor (12).

6. An apparatus (10) in accordance with any one of the preceding claims,
wherein an optical system (14) is connected before the image sensor (12) and is protected by the boundary surface (18).

7. An apparatus (10) in accordance with claim 7,
wherein the evaluation unit (22) is designed to determine the reference image contrast while utilizing a known basic contrast function of the optical system (14) and/or of the boundary surface (18).

8. An apparatus (10) in accordance with any one of the preceding claims,
which has a stereo camera or a distance-measuring camera, in particular in accordance with the time of flight of light principle.

9. An apparatus (10) in accordance with any one of the preceding claims,
which has a distance-measuring camera in accordance with the principle of active triangulation, wherein the contrast pattern is simultaneously a complex triangulation pattern.

10. An apparatus (10) in accordance with any one of the preceding claims,
wherein the contrast illumination device is monochromatic.

11. A method of monitoring a spatial zone (20) having at least one image sensor (13) protected by a transparent boundary surface (18), in particular a front screen or a front lens, wherein a reference image contrast is determined at a known degree of contamination and the image contrast of images taken by the image sensor (12) in operation is determined and a degree of contamination of the boundary surface (18) is determined from the image contrast while including a comparison between the image contrast of the images taken in operation and of the reference image contrast,
**characterized in that**
the spatial zone (20) is actively illuminated by a contrast pattern; and **in that** the image contrast is determined as a function of the location and thus contamination on the boundary surface (18) is localized.

12. A method in accordance with claim 11,
wherein the spatial zone (20) is monitored for an object intrusion and a source of danger in the spatial zone (20) is secured on an object intrusion.

13. A method in accordance with claim 11 or claim 12,
wherein a warning is output or the source of danger is secured in dependence on the location of the contamination.

14. A method in accordance with any one of the claims 11 to 13, wherein the reference image contrast is determined with a clean boundary surface or while utilizing a known basic contrast function of an optical system (14 and/or of the boundary surface (18).

15. A method in accordance with any one of the claims 11 to 14, wherein the monitoring utilizes the principle of active triangulation; and wherein the contrast pattern is simultaneously a complex triangulation pattern.

## Revendications

1. Dispositif (10) pour la surveillance d'une zone dans l'espace (20) avec au moins un capteur d'images (12), qui comporte une surface limite transparente (18), en particulier une vitre frontale ou une lentille frontale, et avec une unité d'évaluation (22) qui est réalisée pour déterminer un contraste d'image de référence pour un degré d'encrassement connu, ainsi que le contraste d'image d'images prises par le capteur d'images (12) et à partir du contraste d'image pour déterminer un degré d'encrassement de la surface limite (18) et exploiter le contraste d'image de référence par comparaison avec le contraste d'image dans la détermination du degré d'encrassement,
**caractérisé en ce qu'**il est prévu un moyen d'éclairage à contraste (26), qui est réalisé pour éclairer la zone de l'espace (20) avec un motif de contraste, et **en ce que** l'unité d'évaluation (22) est réalisée pour déterminer le contraste d'image en fonction de l'emplacement, et ainsi de localiser un encrassement sur la surface limite (18).

2. Dispositif (10) selon la revendication 1,
dans lequel l'unité d'évaluation (22) est réalisée pour reconnaître une intervention d'un objet dans la zone dans l'espace (20), et dans lequel il est prévu une commande (24) qui est réalisée pour sécuriser une source de danger dans la zone dans l'espace (20) lors de l'intervention d'un objet.

3. Dispositif (10) selon la revendication 1 ou 2,
dans lequel l'unité d'évaluation (22) est réalisée, en fonction de l'emplacement de l'encrassement, pour délivrer un avertissement ou pour commuter vers un mode d'erreur.

4. Dispositif selon l'une des revendications précédentes,
dans lequel l'unité d'évaluation (22) est réalisée pour déterminer le contraste d'image de référence lorsque la surface limite (18) est propre.

5. Dispositif (10) selon l'une des revendications précédentes,
dans lequel le capteur d'images (12) est précédé d'un filtre optique (14, 18) adapté au motif de contraste.

6. Dispositif (10) selon l'une des revendications précédentes,
dans lequel le capteur d'images (12) est précédé d'une optique (14) qui est protégée de la surface limite (18).

7. Dispositif (10) selon la revendication 6,
dans lequel l'unité d'évaluation (22) est réalisée pour déterminer le contraste d'image de référence en utilisant une fonction de contraste de base connue de l'optique (14) et/ou de la surface limite (18).

8. Dispositif (10) selon l'une des revendications précédentes, qui comprend une caméra stéréoscopique ou une caméra assurant une mesure de distance, en particulier d'après le principe du temps de propagation de la lumière.

9. Dispositif (10) selon l'une des revendications précédentes,
qui comprend une caméra assurant une mesure de distance d'après le principe de la triangulation active, et dans lequel le motif de contraste est simultanément un motif de triangulation complexe.

10. Dispositif (10) selon l'une des revendications précédentes,
dans lequel le moyen d'éclairage à contraste est monochromatique.

11. Procédé pour la surveillance d'une zone dans l'espace (20) avec au moins un capteur d'images (12) protégé par une surface limite transparente (18), en particulier une vitre frontale ou une lentille frontale, dans lequel on détermine un contraste d'image de référence, pour un degré d'encrassement connu, ainsi que le contraste d'image d'images prises en fonctionnement par le capteur d'images (12), et à partir du contraste d'image pour déterminer un degré d'encrassement de la surface limite (18) en exploitant une comparaison entre le contraste d'image des images prises en fonctionnement et le contraste d'image de référence,
**caractérisé en ce que**
la zone dans l'espace (20) est éclairée de manière active avec un motif de contraste, et **en ce que** le contraste d'image est déterminé en fonction de l'emplacement, et on localise ainsi un encrassement sur la surface limite (18).

12. Procédé selon la revendication 11,
dans lequel la zone dans l'espace (20) est surveillée pour ce qui concerne une intervention d'un objet, et en cas d'intervention d'un objet une source de danger dans la zone dans l'espace (20) est sécurisée.

13. Procédé selon la revendication 11 ou 12,
dans lequel, en fonction de l'emplacement de l'encrassement, on délivre un avertissement ou on sécurise la source de danger.

14. Procédé selon l'une des revendications 11 à 13,
dans lequel le contraste d'image de référence est déterminé pour une surface limite propre ou en exploitant une fonction de contraste de base connue d'une optique (14) et/ou de la surface limite (18).

15. Procédé selon l'une des revendications 11 à 14,
dans lequel la surveillance utilise le principe de la triangulation active et dans lequel le motif de contraste est simultanément un motif de triangulation complexe.
